# EUROPEAN PATENT SPECIFICATION

(11) **EP 1 792 011 B1**
(45) Date of publication and mention of the grant of the patent: **10.10.2018**
(21) Application number: 05779478.6
(22) Date of filing: 24.08.2005
(51) Int. Cl.: D21H 21/36, B32B 13/08, E04C 2/04, D21H 27/32, D21H 27/18

(54) **CARDBOARD, GYPSUM BOARD AND CARDBOARD-COATED GYPSUM BOARD PRODUCTION METHOD**
KARTONPLATTE, GIPSKARTONPLATTE UND HERSTELLUNGSVERFAHREN DAFÜR
CARTON, PLAQUE DE PLATRE ET PROCEDE DE PRODUCTION D'UNE PLAQUE DE PLATRE RECOUVERTE DE CARTON

(30) Priority: 25.08.2004 FI 20045307
(43) Date of publication of application: 06.06.2007
(73) Proprietor: Walki Group Oy, 02170 Espoo (FI)
(72) Inventor: PEURAMÄKI, Juhani, FI-37640 VALKEAKOSKI (FI)
(74) Representative: Berggren Oy, Tampere
(86) International application number: PCT/FI2005/000365
(87) International publication number: WO 2006/021614

(56) References cited:
- EP-A2- 1 251 215
- WO-A1-2004/002916
- WO-A1-2004/038120
- WO-A1-2004/108625
- GB-A- 1 156 816
- GB-A- 1 429 319
- JP-A- 2004 115 978
- US-A- 3 998 944
- US-A- 5 719 172
- US-A1- 2003 035 981
- US-B1- 6 294 186

## Description

This invention relates to a gypsum board covering comprising cardboard with a water-repellent treatment, and to gypsum board comprising a board made of gypsum and a cardboard covering with water-repellent treatment attached to the gypsum board. This invention also relates to a method for producing the cardboard-covered gypsum board.

Gypsum board is a construction material which is commonly used in indoor and outdoor walls. Gypsum board is susceptible to damp, which in the long term can lead to micro-organism growth. This places restrictions on the use of gypsum board in wet rooms such as beneath tiles in bathrooms. Even though boards placed beneath tiles are generally treated with a waterproofing agent, untreated areas may be left on the boards' surface, which will let moisture into the boards.

GB 1 429 319 discloses a fungicidal paper, which finds its application in wall boards. The paper is based on a fungicide dispersion comprising a fungicidally effective amount of a water-insoluble metal quinolate salt. US 6 294 186 relates to antimicrobial compositions which provide enhanced immediate as well as residual anti-viral and antibacterial efficacy. The compositions comprise a safe and effective amount of a benzoic acid analog; safe and effective amount of a metal salt; and a dermatologically acceptable carrier for the acid and salt wherein said composition has a pH of from about 1 to about 7. WO 2004/002916 provides a mold-resistant gypsum panel that includes a core of an interlocking matrix of calcium sulfate dihydrate crystals, a facing material on at least one side of the panel, and a salt of pyrithione dispersed through both the core and the facing material. US 2003/035981 discloses a gypsum board having antifungal properties. The board comprises a gypsum core, front and back paper facings and an antifungal agent effective at inhibiting fungal growth. A preferred antifungal agent is cetyl pyridinium chloride. The antifungal agent can be present in the gypsum core and/or on one or both of the paper facings.

The gypsum board covering produced in accordance with this invention is characterised by a treatment agent in the cardboard which prevents the growth of micro-organisms. The boards produced in accordance with this invention are characterised by a treatment agent in the cardboard covering which prevents the growth of micro-organisms.

Micro-organisms are yeasts, bacteria and fungi such as mould fungi. By gypsum board in this application we mean a board containing gypsum. The board may contain other materials in addition to gypsum, including for instance mineral or wood fibres.

The gypsum board produced in accordance with this invention can be used as a construction material in wet rooms. In addition to the gypsum board, this board comprises a cardboard covering, onto which a waterproofing treatment has been spread. The cardboard covering is made water-repellent with a polymer compound containing waxy polymers. In addition to having water-repellent properties, the polymer compound used must be sufficiently heat-resistant and allow steam to permeate through the treated cardboard. This is important because cardboard-covered gypsum boards can be dried during production to prevent their internal steam pressure from rising too high. The structures into which the gypsum boards are placed require the gypsum board to be breathable. Breathability can be evaluated for instance through steam permeability. A good steam permeability level is approximately 3 × 10⁻⁹ kg/m2•s•Pa or an SD value of approximately 0.1 m. The cardboard's surface must be such that the waterproofing treatment attaches to it properly. Usually the cardboard covering is in a single layer, but multilayer solutions are also possible. After the production process, the cardboard is preferably acidic or made acidic, because the functioning of benzoic acid salts is optimal in acidic conditions.

After the necessary lowering of the pH (e.g. with weak sulphuric acid), the cardboard is first treated with an agent which prevents the growth of microbes. The anti-microbial agent is a benzoic acid salt, for example sodium benzoate or potassium benzoate. Usually the cardboard used is 150-250 g/m² in specific weight, preferably the specific weight is 200 g/m². The benzoic acid salt is dissolved in water to form a 20% aqueous solution by weight. A binding agent, for example acrylate, can be added to the aqueous solution. The binding agent has an effect e.g. on the surface hardness of the cardboard. Optimally, the binding agent should be lipophobic. The cardboard is treated with the aqueous solution of benzoic acid salt, applied with a surface adhesive press in such a way that the dry cardboard contains 2-4 g/m², optimally 3 g/m², of benzoic acid salt. A particular benefit in the use of benzoic acid salt lies in the fact that this treatment agent is entirely non-toxic. The depth of penetration of the benzoic acid salt is preferably 40-60 µm and is usually approximately 50 µm. The concentration of benzoic acid salt in the part of the cardboard which it permeates is 7-9% by weight, usually approximately 8% by weight. Furthermore, adipic acid or citric acid can be used in combination of the abovementioned benzoic acid.

Once the cardboard has been treated with the antimicrobial agent, dried and cooled, the cardboard is treated with a polymer compound comprising waxy polymers. The UV resistance of the polymer compound is usually high. The polymer compound is spread, sufficiently cooled, onto the cardboard, and any excess is scraped off with a blade scraper. After this the cardboard's heat level is raised, whereby the polymer compound is absorbed deeper into the cardboard. The polymer compound must not, however, go through to the other side of the cardboard so that the cardboard can be attached to the gypsum board at a later production stage. Therefore the cardboard should only be treated on one side and in such a way that the cardboard is still permeable to steam. A good indication of a maintained ability to permeate steam is the Gurley air permeability, which should be less than 100 s / 100 ml. The amount of the polymer compound in the finished cardboard, when dry, should be 10-14 g/m², optimally 12 g/m². It is important that the fire load of the treated cardboard does not rise above 4 MJ/m². The depth of penetration of the polymer compound should be 90-110 µm, optimally approximately 100 µm.

The cardboard is attached to a board made of gypsum with gypsite, after which the finished boards are dried. This process further improves the cardboard's steam permeability and friction. A particular benefit brought by the gypsum board covering described in this application is the fact that the covering (cardboard) can be used in the manner of ordinary gypsum cardboard without specific running parameters. A further benefit is the fact that only the covering has to be treated with an agent to prevent the growth of micro-organisms.

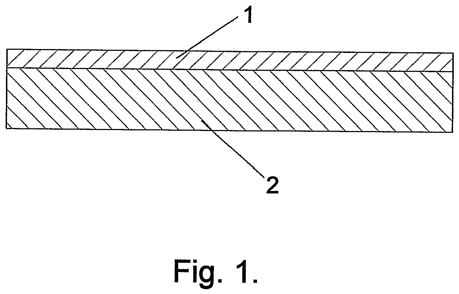

Figure 1 shows a cross-section of the gypsum board produced in accordance with this invention. The gypsum board comprises a board made of gypsum (2) and a gypsum board covering (1). The board made of gypsum (2) and the gypsum board covering (1) are connected together with gypsite. The treatments applied to the covering (1) - the treatment to prevent the growth of micro-organisms and the treatment with a polymer compound - are mainly applied to that side of the covering (1) that is facing away from the gypsum board.

## Claims

1. A cardboard for use as a gypsum board covering, wherein
- the cardboard comprises a first side and a second side,
- the cardboard has been treated, after lowering the pH, on its first side with a benzoic acid salt solution applied with a surface adhesive press in such a way that the dry cardboard contains 2 - 4 g/m², of benzoic acid salt, and
- after the cardboard has been treated with the benzoic acid salt, dried, and cooled, the cardboard is treated to be water-repellent by treating the cardboard only on the first side with a polymer compound comprising waxy polymers that allow steam to permeate through the treated cardboard.

2. The cardboard in accordance with claim 1, **characterised in that**
- the concentration of benzoic acid salt in the part of the cardboard which it permeates is 7 - 9 % by weight.

3. The cardboard in accordance with claim 1 or 2, **characterised in that**
- the benzoic acid salt is sodium benzoate or potassium benzoate.

4. The cardboard in accordance with any of the claims 1 to 3, **characterised in that**
- the covering has a steam permeability which is less than 100 s/100 ml.

5. The cardboard in accordance with any of the claims 1 to 4, **characterised in that**
- the depth of penetration of the polymer compound is from 90 to 110 µm.

6. A gypsum board, comprising
- a board made of gypsum,
**characterised in that** the gypsum board further comprises
- the cardboard according to any of the claims 1 to 5, wherein
- the cardboard is attached to the board made of gypsum.

7. The gypsum board of claim 6, **characterised in that**
- the board made of gypsum and the cardboard are connected together with gypsite in such a way that
- the second side of the cardboard faces the board made of gypsum.

8. A method for the production of a gypsum board, comprising
- providing a cardboard of any of the claims 1 to 5 and
- attaching the cardboard from its second side to a board made of gypsum to form the gypsum board.

9. The method of claim 8, **characterised in that**
- the cardboard is attached from its second side to the board made of gypsum using gypsite.

10. Use of the cardboard of any of the claims 1 to 5 as a covering of a gypsum board.

## Patentansprüche

1. Kartonplatte zur Verwendung als Gipsplattenabdeckung, wobei
- die Kartonplatte eine erste Seite und eine zweite Seite aufweist,
- die Kartonplatte nach Absenkung des pH-Wertes auf seiner ersten Seite mit einer Benzoesäure-Salzlösung behandelt wurde, die mit einer Oberflächenklebepresse so aufgetragen wurde, dass die trockene Kartonplatte 2-4 g/m² Benzoesäuresalz enthält, und
- nachdem die Kartonplatte mit dem Benzoesäuresalz behandelt, getrocknet und abgekühlt wurde, wird die Pappe wasserabweisend behandelt, indem die Pappe nur auf der ersten Seite mit einer Polymerverbindung behandelt wird, die wachsartige Polymere enthält, die Dampf durch die behandelte Kartonplatte eindringen lassen.

2. Kartonplatte nach Anspruch 1, **dadurch gekennzeichnet, dass**
- die Konzentration des Benzoesäuresalzes in dem Teil der Kartonplatte, den es durchdringt, 7 - 9 Gew.-% beträgt.

3. Kartonplatte nach Anspruch 1 oder 2, **dadurch gekennzeichnet, dass**
- das Benzoesäuresalz Natriumbenzoat oder Kaliumbenzoat ist.

4. Kartonplatte nach einem der Ansprüche 1 bis 3, **dadurch gekennzeichnet, dass**
- die Abdeckung eine Dampfdurchlässigkeit hat, die weniger als 100 s/100 ml beträgt.

5. Kartonplatte nach einem der Ansprüche 1 bis 4, **dadurch gekennzeichnet, dass**
- die Eindringtiefe der Polymerverbindung 90 bis 110 µm beträgt.

6. Gipsplatte, bestehend aus
- einer Platte aus Gips,
**dadurch gekennzeichnet, dass** die Gipsplatte weiterhin aufweist:
- die Kartonplatte nach einem der Ansprüche 1 bis 5, wobei
- die Kartonplatte auf der Gipsplatte befestigt wird.

7. Gipsplatte nach Anspruch 6, **dadurch gekennzeichnet, dass**
- die Gipsplatte und die Kartonplatte mit Gipsmaterial so verbunden sind, dass
- die zweite Seite der Kartonplatte der Gipsplatte zugewandt ist.

8. Verfahren zur Herstellung einer Gipsplatte, bestehend aus
- Bereitstellen einer Kartonplatte nach einem der Ansprüche 1 bis 5 und
- Anbringen der Kartonplatte von ihrer zweiten Seite an einer Gipsplatte zur Bildung der Gipsplatte.

9. Verfahren nach Anspruch 8, **dadurch gekennzeichnet, dass**
- die Kartonplatte von ihrer zweiten Seite mit Hilfe von Gips an der Gipsplatte befestigt wird

10. Verwenden der Kartonplatte nach einem der Ansprüche 1 bis 5 als Abdeckung einer Gipsplatte.

## Revendications

1. Carton destiné à être utilisé en tant que revêtement pour plaque de plâtre, où
- le carton comprend une première face et une seconde face,
- le carton a été traité, après abaissement du pH, sur sa première face avec une solution de sel d'acide benzoïque appliquée avec une presse d'adhésion de surface de façon à ce que le carton sec contienne 2-4 g/m² de sel d'acide benzoïque, et
- après que le carton a été traité avec le sel d'acide benzoïque, puis séché, et refroidi, le carton est traité pour être hydrofuge par traitement du carton, uniquement sur la première face, avec un composé polymère comprenant des polymères cireux qui permettent à la vapeur d'eau de perméer à travers le carton traité.

2. Carton selon la revendication 1, **caractérisé en ce que**
- la concentration de sel d'acide benzoïque dans la partie du carton à travers laquelle il permée est de 7-9 % en poids.

3. Carton selon la revendication 1 ou 2, **caractérisé en ce que**
- le sel d'acide benzoïque est du benzoate de sodium ou du benzoate de potassium.

4. Carton selon n'importe lesquelles des revendications 1 à 3, **caractérisé en ce que**
- le revêtement a une perméabilité à la vapeur d'eau qui est inférieure à 100 s/100 ml.

5. Carton selon n'importe lesquelles des revendications 1 à 4, **caractérisé en ce que**
- la profondeur de pénétration du composé polymère est de 90 à 110 µm.

6. Plaque de plâtre, comprenant
- un panneau en plâtre,
**caractérisée en ce que** la plaque de plâtre comprend en outre
- le carton selon n'importe lesquelles des revendications 1 à 5, où
- le carton est fixé au panneau en plâtre.

7. Plaque de plâtre selon la revendication 6, **caractérisée en ce que**
- le panneau en plâtre et le carton sont reliés ensemble avec de la gypsite de façon à ce que
- la seconde face du carton fait face au panneau en plâtre.

8. Procédé de production d'une plaque de plâtre, comprenant
- la fourniture d'un carton selon n'importe lesquelles des revendications 1 à 5 et
- la fixation du carton, par sa seconde face, sur un panneau en plâtre pour former la plaque de plâtre.

9. Procédé selon la revendication 8, **caractérisé en ce que**
- le carton est fixé, par sa seconde face, sur le panneau en plâtre à l'aide de gypsite.

10. Utilisation du carton selon n'importe lesquelles des revendications 1 à 5 en tant que revêtement pour plaque de plâtre.
